# EUROPÄISCHE PATENTSCHRIFT

(11) **EP 2 112 098 B1**
(45) Veröffentlichungstag und Bekanntmachung des Hinweises auf die Patenterteilung: **05.09.2012**
(21) Anmeldenummer: 09005221.8
(22) Anmeldetag: 09.04.2009
(51) Int. Cl.: B65G 21/10

(54) **Transportvorrichtung**
Transport device
Dispositif de transport

(30) Priorität: 22.04.2008 DE 102008020229
(43) Veröffentlichungstag der Anmeldung: 28.10.2009
(73) Patentinhaber: Bizerba GmbH & Co. KG, 72336 Balingen (DE)
(72) Erfinder: Berger, Hermann, 31079 Adenstedt (DE); Göstenkors, Marco, 31134 Hildesheim (DE)
(74) Vertreter: Wagner, Jürgen

(56) Entgegenhaltungen:
- WO-A-2005/108249
- DE-A1-102004 034 653
- DE-T2- 60 201 211

## Beschreibung

Die Erfindung betrifft eine Transportvorrichtung gemäß den Merkmalen des Oberbegriffs des Anspruchs 1.

Bei Transportvorrichtungen mit Förderbändern besteht in der Praxis oftmals die Notwendigkeit, Teile des Förderbandes abnehmen zu können.

So ist aus der DE 10 2004 034 653 A1 eine Transportvorrichtung für eine Waage bekannt, bei der der Fördertisch ein über einen Motor mit Riementrieb angetriebenes Endlosband aufweist und mit einer Wägezelle zusammenwirkt. Der Fördertisch kann zum Reinigen von der Wägezelle abgenommen werden.

In der DE 602 01 211 T2 ist eine Fördervorrichtung gezeigt, gemäß dem Oberbegriff Anspruchs 1, die einen abnehmbaren Bandkörper aufweist, über den ein angetriebenes Endlosband geführt ist. Der Bandkörper ist zweiteilig ausgebildet und in einem separaten Lagerrahmen gehaltert. Zum Abnehmen wird der zweiteilige Bandkörper abgeknickt und eine Kupplung zum Antriebsmotor getrennt.

Der Erfindung liegt die Aufgabe zugrunde eine Transportvorrichtung zu schaffen, die konstruktiv einfach aufgebaut ist und dabei einfach zu reinigen ist und einen geringen Wartungsaufwand benötigt.

Diese Aufgabe wird erfindungsgemäß mit einer Transportvorrichtung gemäß den Merkmalen des Anspruchs 1 gelöst.

Die Transportvorrichtung weist einen Förderrahmen mit einem zweiteiligen Lager zum Haltern der Transportwalze bzw. der Umlenkwalze eines Fördertisches auf. Durch Trennen der beiden Teile des Lagers wird die Transportwalze bzw. die Umlenkwalze freigegeben. Der Fördertisch ist im Betrieb der Transportvorrichtung über die Umlenkwalze und/oder die Transportwalze mit dem Förderrahmen verbunden, somit kann der Fördertisch einfach durch Öffnen dieser Verbindung gelöst werden. Das Trennen der beiden Teile kann auf einfache Art und Weise manuell erfolgen, indem z. B. ein Schnellverschluss geöffnet wird, der die beiden Teile des Lagers in Betriebstellung miteinander verbindet.

Der Schnellverschluss kann als ein manuell zu öffnender Spannverschluss oder Riegelverschluss oder Knebelverschluss ausgebildet sein. Der Spannverschluss verbindet die beiden Lagerteile über eine federbelastete Klammer. Der Riegelverschluss verbindet die beiden Lagerteile über einen federbelasteten Riegel. Der Knebelverschluss verbindet die beiden Lagerteile über einen federbelasteten Knebel. Dadurch ist es möglich einerseits eine mechanisch sichere und stabile Verbindung der beiden Lagerteile zu erreichen und andererseits die Lagerteile ohne Werkzeug einfach durch manuelles Öffnen des Schnellverschlusses zu trennen.

In einer Ausführung ist vorgesehen, dass das erste Teil des Lagers fest mit dem Förderrahmen verbunden ist. Das zweite Teil des Lagers ist schwenkbar an dem Förderrahmen oder an dem ersten Teil befestigt. Das ermöglicht ein Trennen der beiden Teile des Lagers mittels einer einfachen Schwenkbewegung. Zudem sind so die beiden Teile unverlierbar miteinander bzw. mit der Transportvorrichtung verbunden.

Um eine mechanisch sichere und passgenaue Halterung des Fördertisches zu erreichen ist vorgesehen, dass ein Spannverschluss die beiden Teile des Lagers miteinander verbindet. Der Spannverschluss weist eine federnde Klammer und einen Spannbügel zum Spannen der Klammer auf. Es kann vorgesehen sein, dass jede Umlenkwalze bzw. Transportwalze zwei solcher Spannverschlüsse aufweist. Jedoch genügt es bereits, wenn ein Spannverschluss auf einer Seite der Walze angeordnet ist und die andere Seite der Walze z. B. durch Einführen einer Achsverlängerung in eine passgenaue Aussparung gehaltert wird.

In einer Ausgestaltung ist vorgesehen, dass die Transportwalze über einen Motor angetrieben ist. Der Motor kann dazu in der Transportwalze integriert sein. Dies stellt eine besonders platzsparende Lösung dar. In einer alternativen Ausführung kann der Motor am Förderrahmen angeordnet sein und die Transportwalze über ein Getriebe oder einen Zahnriemen antreiben. Dies stellt eine Lösung dar, bei der ein kostengünstiger Antriebsmotor verwendet werden kann und zugleich die Masse des Fördertisches verringert wird. Letzteres ist von besonderer Bedeutung, wenn der Fördertisch automatisch angetrieben verschwenkt werden soll, oder wenn der Fördertisch mit einer Wägezelle zur Gewichtsermittlung von Stückgut zusammenwirkt. Bei der Gewichtsermittlung kommt es insbesondere darauf an, das Gewicht des Fördertisches gering zu halten, das dieser als Vorlast auf die Wägezelle wirkt und mit seinem Eigengewicht deren Empfindlichkeit beeinflusst.

Um bei einem Antrieb über einen Zahnriemen sicherzustellen dass dieser im Betrieb die notwendige Spannung aufweist, weist das Lager eine Aufnahme zur Halterung der Transportwalze auf, die durch eine Aussparung gebildet ist, deren Entfernung zum Motor auf die Länge des gespannten Zahnriemens abgestimmt ist. Die Aussparung ist zudem so geformt, dass sie die Transportwalze von unten her stützt und diese auch bei geöffnetem Lager in der Aussparung sicher gehaltert ist. Dies verhindert, dass beim Öffnen des Verschlusses bzw. Trennen der Lagerteile der Fördertisch z. B. nach unten fällt bzw. aufgrund des gespannten Zahnriemens nach unten gezogen wird. Da die Transportwalze bei gespanntem Zahnriemen nicht anzuheben ist, muss dieser beim Abnehmen des Fördertisches zunächst entspannt werden.

Dazu kann vorgesehen sein, dass das Lager eine Kulissenkurve bzw. eine Kulissenbahn aufweist, entlang derer die Transportwalze in Richtung zum Motor hin geführt werden kann, um den Zahnriemen zu entspannen. In ihrer axialen Verlängerung weist die Transportwalze einen als Kulissenstein ausgebildeten Adapter,auf. Zur Befestigung des Adapters ist vorgesehen, dass dieser mit der Achse der Transportwalze verschraubt oder verklebt werden kann. Der Adapter kann als runde Buchse ausgebildet sein, die an ihrem Umfang eine geschlossen umlaufende Nut aufweist, in die die beiden Lagerteile zum Führen der Achse eingreifen. Über diese Nut wird zum einen eine Einführhilfe beim Einsetzen der Transportwalze in die Kulissenführung und zum anderen eine Zwangsführung der Transportwalze gewährleistet. Zugleich sichert die Nut die Transportwalze gegen ein axiales Verschieben.

In einer Ausgestaltung ist vorgesehen, dass die Kulissenkurve in dem ersten, feststehenden Teil des Lagers angeordnet ist. So wird gewährleistet, dass die Transportwalze auch bei getrennten Lagerhälften sicher geführt wird. In dem zweiten, verschwenkbaren Teil des Lagers ist eine Aussparung vorgesehen, die so bemessen und angeordnet ist, dass sie die Kulissenkurve in Betriebsstellung, also bei miteinander verbundenen Lagerteilen, abdeckt. In der Betriebsstellung bilden die beiden unmittelbar aneinanderliegenden Aussparungen der beiden Lagerteile eine Aussparung, die so bemessen ist, dass die Transportwalze bzw. ein Adapter der Transportwalze in dieser Aussparung passgenau und insbesondere spielfrei aufgenommen werden kann.

In einer Ausgestaltung ist vorgesehen, dass der Fördertisch um eine Achse schwenkbar ist. So kann z. B. mit einem schwenkbaren Fördertisch eine Sortiervorrichtung oder eine Wägezelle, z.B. für Kontrollwaagen oder Checkweigher aufgebaut werden.

Bei der Anwendung der Transportvorrichtung bei einer Sortiervorrichtung wird der schwenkbare Fördertisch dazu verwendet, um Stückgut aus einer Förderebene heraus zu sortieren. Dies geschieht vorzugsweise mittels eines Schwenkantriebs, der den Fördertisch automatisch verschwenkt. Der Schwenkantrieb kann dabei in der Schwenkachse des Fördertisches angreifen. Vorzugsweise ist vorgesehen, dass die Schwenkachse eines Fördertisches durch dessen angetriebene Transportwalze hindurch verläuft. Insbesondere ist es vorteilhaft, wenn die Transportwalze die Schwenkachse des jeweiligen Fördertisches bildet. Dies ermöglicht einen konstruktiv besonders einfachen Aufbau, da die drehbare Transportwalze als solche gleichzeitig das Drehlager des Fördertisches bildet.

In einer weiteren Ausgestaltung kann der Schwenkantrieb als Linearantrieb ausgebildet sein, der an dem Bandkörper des Fördertisches angreift. In letzterem Falle ist vorgesehen, dass auch die Verbindung von Linearantrieb und Fördertisch als zweiteilige Aufnahme ausgestaltet ist, die über einen manuell betätigbaren Spannverschluss zu öffnen ist. Somit kann durch Lösen der manuell zu betätigenden Spannverschlüsse von Schwenklager und Aufnahme der Fördertisch komplett abgenommen werden. Diese Ausgestaltung hat den Vorteil, dass der Fördertisch als Ganzes abnehmbar ist und dass kein zusätzlicher Halterahmen erforderlich ist.

Bei einer Anwendung der Transportvorrichtung bei einer Wägezelle kann der Fördertisch anhand des Gewichtes von transportiertem Stückguts um seine Schwenkachse verschwenkt werden. Beim Fördern des Stückguts entlang des Fördertisches entsteht so eine variable Gewichtskraft, die mittels einer Kraftmesszelle ermittelt werden kann.

Eine Verwendung der Transportvorrichtung ist z.B. bei der Herstellung von Lebensmitteln, die als Stückgut verpackt werden, vorgesehen. Jedoch ist die Verwendung der Transportvorrichtung in allen Bereichen der Fertigung oder Logistik wie z.B. bei Paketdiensten möglich, in denen auf Wartungsfreundlichkeit oder Hygiene Wert gelegt wird.

Weitere Ausführungsbeispiele der Erfindung sind in den Figuren dargestellt und der dazugehörenden Beschreibung beschrieben.

### Es zeigen,

- Figur 1:: Ein Ausführungsbeispiel der erfindungsgemäßen Transportvorrichtung bei einer Sortiervorrichtung.
- Figur 2:: Eine schematische Darstellung eines einzelnen Fördertisches in ausgeschwenkter Position.
- Figur 3:: Eine vergrößerte Darstellung des Schwenklagers eines Fördertisches.
- Figur 4:: Eine vergrößerte Darstellung des Schwenklagers eines Fördertisches bei dessen Demontage vom Förderrahmen.
- Figur 5:: Eine Detaildarstellung des Anschlusses eines Hubzylinders an den Fördertisch.

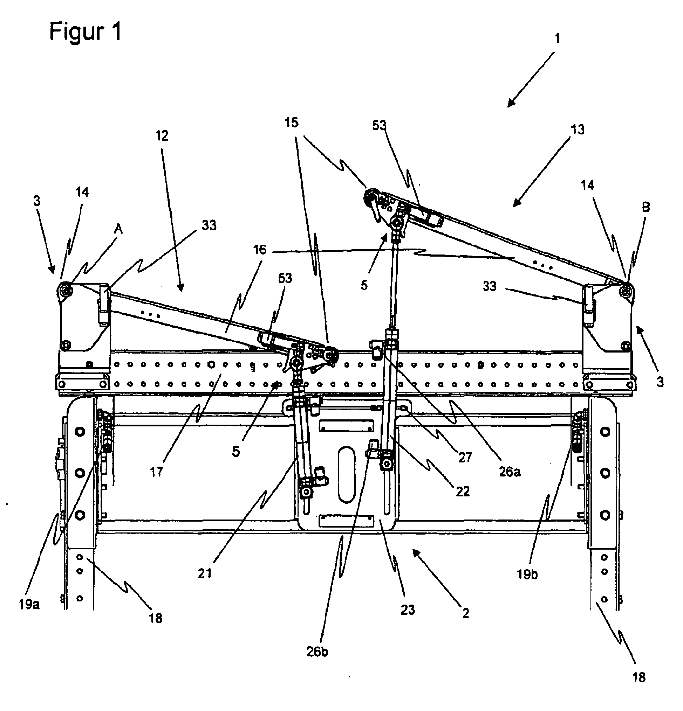

Die **Figur 1** zeigt eine Seitenansicht einer Transportvorrichtung 1. Die Transportvorrichtung 1 ist als Vorrichtung zum Sortieren von Stückgut ausgebildet. Sie weist einen Förderrahmen 17 auf, an dem zwei schwenkbare Fördertische 12 und 13 gehaltert sind. Der Förderrahmen 17 ist an seiner Unterseite mit Standfüßen 18 versehen, die über ein Justiergewinde in der Höhe verstellt werden können, um auch bei unebenem Untergrund eine horizontale Aufstellung der Transportvorrichtung zu ermöglichen.

In der Darstellung der Figur 1 sind beide Fördertische 12 und 13 in einer ausgeschwenkten Position dargestellt. In normaler Betriebsstellung oder Neutralstellung sind die beiden Fördertische 12 und 13 in einer gemeinsamen Förderebene fluchtend zueinander angeordnet. An die Transportvorrichtung links bzw. rechts in der Darstellung der Figur 1 können weitere, nicht dargestellte Förderbänder angeschlossen werden, um z. B. von der linken Seite aus Stückgut zu der Transportvorrichtung zuzuführen und auf der rechten Seite der Darstellung Stückgut abzuführen. Die Darstellung der Figur 1 ist so gewählt, dass die Förderrichtung von links nach rechts verläuft.

Stückgut wird von der Transportvorrichtung aussortiert, indem das Stückgut von links auf die Transportvorrichtung d.h. auf den ersten Fördertisch 12 gefördert wird dieser wie dargestellt nach unten abgesenkt ist und das Stückgut nach unten aussortiert. Der zweite Fördertisch 13 wird zeitgleich d. h. synchron mit dem ersten Fördertisch 12 nach oben verschwenkt, sodass zum einen der entstehende Zwischenraum zwischen den beiden Fördertischen 12 und 13 eine große freie Höhe aufweist und zum anderen der jeweilige Schwenkweg für den einzelnen Fördertisch 12 und 13 relativ gering sein kann. Das Stückgut wird entlang des Fördertisches 12 nach unten gefördert und kann dort mittels eines weiteren Förderbandes weitertransportiert oder in einer Sammelbox aufgenommen werden.

Die Transportvorrichtung weist einen Schwenkantrieb 2 mit einem Linearantrieb auf, wobei jedem Fördertisch eigene Hubzylinder 21 bzw. 22 zugeordnet sind. Je Fördertisch sind zwei Hubzylinder vorgesehen, die auf gleicher Höhe zu beiden Seiten eines Fördertisches angreifen. In den Figuren ist in der Seitenansicht jeweils nur der vordere Hubzylinder dargestellt. Die Hubzylinder sind an ihrem unteren Ende an einer Halteplatte 23 schwenkbar gelagert. Die Halteplatte 23 ist über Schrauben oder Nieten fest mit dem Förderrahmen 17 verbunden. An Ihrem oberen Bereich weist die Halteplatte eine mechanische Führung 27 mittels horizontal verschiebbaren Halterungen für die Hubzylinder 21, 22 auf.

Die beiden Fördertische 12 und 13 sind spiegelbildlich zueinander angeordnet, und aus den gleichen Bauteilen aufgebaut. Somit kann sich die Beschreibung auf einen einzelnen Fördertisch beschränken, wobei die Beschreibung dann automatisch auch gleichzeitig für zweiten Fördertisch gilt.

Um eine gute Reinigung und/oder Wartung der Transportvorrichtung 1 zu ermöglichen, sind die beiden Fördertische 12, 13 über Spannverschlüsse manuell abnehmbar ausgebildet. Das bedeutet, jeder der Fördertische 12 bzw. 13 kann durch Lösen der Spannverschlüsse mit wenigen Handgriffen von dem Förderrahmen 17 abgenommen werden. Anschließend kann der abgenommene Fördertisch gereinigt werden oder ein neuer bzw. reparierter Fördertisch kann mit dem Förderrahmen 17 verbunden werden. Das Verbinden des Fördertisches erfolgt sinngemäß durch Schließen der Spannverschlüsse.

Der Schwenkantrieb 2 für die Fördertische 12 und 13 umfasst zum einen die schwenkbare Lagerung der Fördertische um deren Schwenkachse A bzw. B wie zum anderen den Linearantrieb umfassend einen an dem Förderrahmen befestigte Halteplatte 23 an der die beiden Hubzylinder 21 und 22 gelagert sind. Deren Energieversorgung erfolgt über nicht dargestellte Pneumatikleitungen die über Ventilanschlüsse der Hubzylinder 26a und 26b diese mit Druckluft versorgen. Die Druckluft kommt von einem separaten Druckluftnetz bzw. wird von einem nicht dargestellten Kompressor bereitgestellt. Die beiden Fördertische 12 und 13 sind an dem Förderrahmen 17 jeweils über ein Schwenklager 3 gelagert.

Die Fördertisch 12 bzw. 13 weisen jeweils einen Bandkörper 16 auf über den ein Endlosband geführt wird. Das Endlosband wird über Walzen umgelenkt, die in Förderrichtung gesehen an den beiden Enden des Fördertisches 12 bzw. 13 angeordnet sind. Die Umlenkwalzen sind einmal als angetriebene Transportwalze 14 und einmal als lose laufende Umlenkwalze 15 ausgestaltet, wobei die Transportwalze 14 jeweils im Bereich des Schwenklagers 3 angeordnet ist und die Umlenkwalze 15 an dem gegenüberliegenden Ende des Fördertisches 12 bzw. 13 angeordnet ist. Im Bereich der Umlenkwalze 15 ist eine Aufnahme 5 vorgesehen, die einen Hubzylinder des Linearantriebs haltert.

Der Schwenkvorgang der Fördertische 12 bzw. 13 wird über eine Steuervorrichtung 19 gesteuert. Die Steuervorrichtung 19 weist an den Haltefüßen 18 angeordnete Ventilblöcke 19a bzw. 19b auf und steuert über diese Ventilblöcke die Energie- bzw. Druckluftzufuhr zu den Anschlüssen 26a und 26b der Hubzylinder. Die Steuervorrichtung steuert die beiden Fördertische 12 bzw. 13 so an, dass der in Förderrichtung gesehene erste, stromaufwärts liegende Fördertisch, wie in der Figur 1 dargestellt nach unten verschwenkt wird, und der in Förderrichtung gesehene zweite, stromabwärts liegende Tisch nach oben verschwenkt wird. Das hat den Vorteil, dass der Sortiervorgang des Stückguts von der Schwerkraft unterstützt abläuft, indem das Stückgut sozusagen bergab aussortiert wird und mit seinem Eigengewicht, den Sortiervorgang unterstützt. Alternativ dazu kann die Steuervorrichtung die Fördertische 12, 13 auch so ansteuern, dass der in Förderrichtung gesehen erste Tisch 12 nach oben verschwenkt wird und der in Förderrichtung gesehen zweite Tisch 13 nach unten verschwenkt wird. In diesem, in den Figuren nicht dargestellten Anwendungsfall, wird von dem ersten Fördertisch 12 aus das Stückgut zu einem oben liegenden Förderband transportiert, wobei gleichzeitig z.B. über den zweiten Fördertisch 13 ein von einem unten liegenden Zuführband geliefertes Stückgut aufgenommen werden kann.

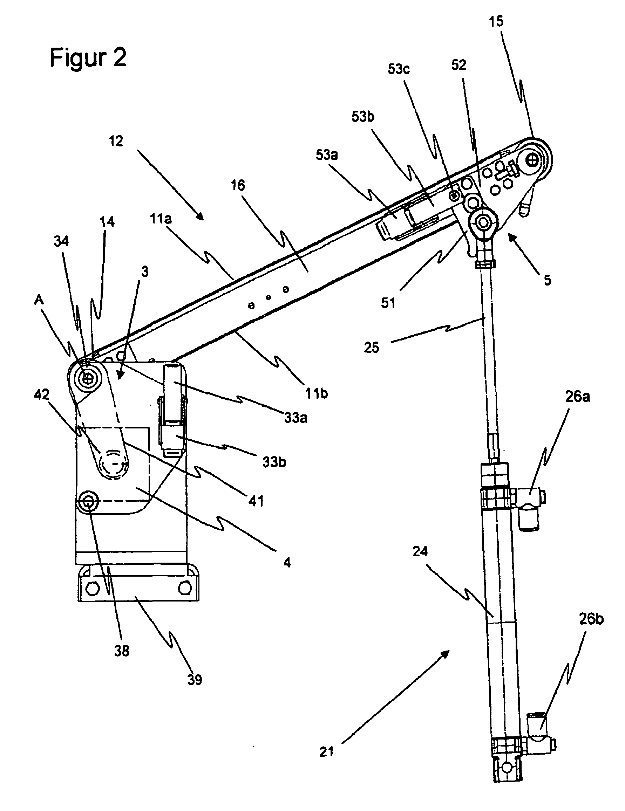

In der **Figur 2** ist ein Fördertisch im Detail dargestellt. Der Fördertisch 12 weist einen Bandkörper 16 auf, über den ein Endlosband geführt ist, wobei das Endlosband an den Enden des Bandkörpers über die Umlenkwalze 15 und über die Transportwalze 14 geführt wird. Auf der Oberseite des Bandkörpers 16 verläuft das obere Trum des Endlosbandes und an der Unterseite des Bandkörpers 16 verläuft das untere Trum 11b des Endlosbandes.

Der Fördertisch 12 ist über einen Hubzylinder 21 und über das Lager 3 mit dem Förderrahmen 17 verbunden. Bei einer Abnahme des Fördertisches 12 von dem Förderrahmen 17, muss lediglich die Verbindung des Fördertisches 12 zu dem Schwenklager und dem Hubzylinder gelöst werden.

Das Schwenklager 3 ist zweiteilig ausgestaltet, wobei die beiden Teile in der Betriebsstellung, die in der Figur 2 dargestellt ist, einander teilweise überdeckend angeordnet sind.

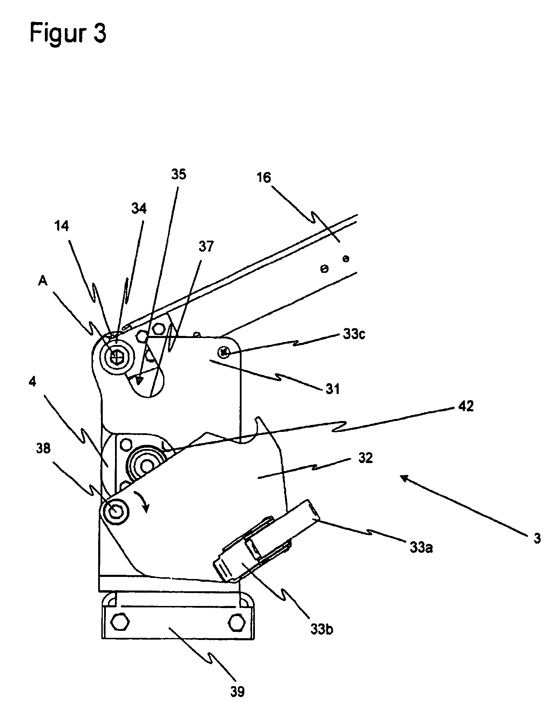

In der **Figur 3** wird dagegen das Schwenklager 3 in geöffneter Position dargestellt. Bei geöffnetem Lager 3 kann eine Entnahme des Fördertisches 12 durch Abheben des Fördertisches nach oben erfolgen oder eine Verbindung eines neu in das Lager 3 eingesetzten Fördertisches 12 mit dem Förderrahmen durch Schließen des Lagers 3 erfolgen. In der Figur 3 sind die beiden Teile 31 bzw. 32 des Lagers 3 gegeneinander verschwenkt dargestellt. Die Form der beiden Teile 31 bzw. 32 ist somit aus der Figur 3 besser ersichtlich. Zum Haltern der Transportwalze 14 des Fördertisches 12 werden zwei gleichartig aufgebaute Schwenklager 3 verwendet, die die Transportwalze 14 zu beiden Seiten des Bandkörpers 16 haltern. In der Seitendarstellung der Figuren ist jeweils nur das vordere Schwenklager 3 dargestellt.

Die beiden Teile des Lagers 31 bzw. 32 sind über einen Spannverschluss 33 miteinander verbunden. Der Spannverschluss 33 weist eine federnde Klammer 33a auf die über eine an dem ersten Teil 31 des Lagers angeordnete Schraube 33c an diesem eingreift und über einen an dem zweiten Teil des Lagers 32 angeordneten Bügel 33b die beiden Teile miteinander verbindet. Die beiden miteinander verbundenen Teile haltern in der in Figur 2 dargestellten, verriegelten Position die Antriebswalze 14 in einer Lagerschale, die durch die beiden Teile 31 bzw. 32 geformt wird. Jedes der beiden Teile 31 und 32 weist dazu eine Ausnehmung auf, deren Kontur so ausgeformt ist, dass die beiden über den Spannverschluss 33 verbundenen Teile 31 und 32 gemeinsam eine Lagerschale ausbilden in der ein Adapter bzw. eine Buchse 34 der Transportwalze gehaltert wird. So wird sichergestellt, dass beim Schließen des Spannverschlusses 33 die Transportwalze 14 sicher und weitgehend spielfrei in dem Schwenklager 3 gehaltert wird. Zudem wird durch das Spannen des Spannverschlusses 33 über die Positionierung der Buchse 34 innerhalb der Ausnehmung eine automatische Justierung der Transportwalze 14 erreicht.

Die Antriebswalze 14 weist in Verlängerung ihrer Achse eine Buchse 34 auf, die in die Lagerschale des Lagers 3 eingreift. Die Buchse wird in dem Schwenklager 3 gegen axiales Verschieben gesichert, indem die Buchse 34 eine umlaufende Nut aufweist, deren Abmessungen genau auf die beiden Teile des Lagers 31 und 32 abgestimmt ist, sodass diese in die Nut eingreifen und die Buchse passgenau aufnehmen.

An dem stromabwärts liegenden Ende des Fördertisches 12 ist die Umlenkwalze 15 angeordnet. In deren Bereich ist eine Aufnahme 5 angeordnet, die mit dem Bandkörper 16 fest verbunden ist und über die der Hubzylinder 21 mit dem Fördertisch 12 lösbar verbunden ist.

Der Hubzylinder 21 weist ein Zylindergehäuse 24 und eine Kolbenstange 25 auf. Der Hubzylinder 21 ist als Pneumatikzylinder ausgebildet und wird über zwei Ventilanschlüsse 26a und 26b mit Druckluft versorgt. Der Hubzylinder 21 ist ein doppelt wirkender Hubzylinder und wird in beiden Arbeitstakten, also sowohl beim Heben als auch beim Senken über Druckluft angetrieben. Alternativ könnte auch ein einfach wirkender Hubzylinder verwendet werden, bei dem dann nur ein Arbeitstakt, entweder Heben oder Senken, von Druckluft angetrieben wird, und der zweite Arbeitstakt dann von einer innerhalb des Hubzylinders angeordneten Feder ausgeführt wird.

Am oberen Ende der Kolbenstange 25 ist ein als Achse ausgebildeter Anschluss 54 vorgesehen, der in einer Aussparung der Aufnahme 5 gehaltert ist. Die Aufnahme 5 ist dazu zweiteilig ausgebildet. Sie weist ein erstes Teil 51, welches fest mit dem Förderbandkörper 16 verbunden ist und ein zweites Teil 52, das an dem ersten Teil schwenkbar gelagert ist, auf.

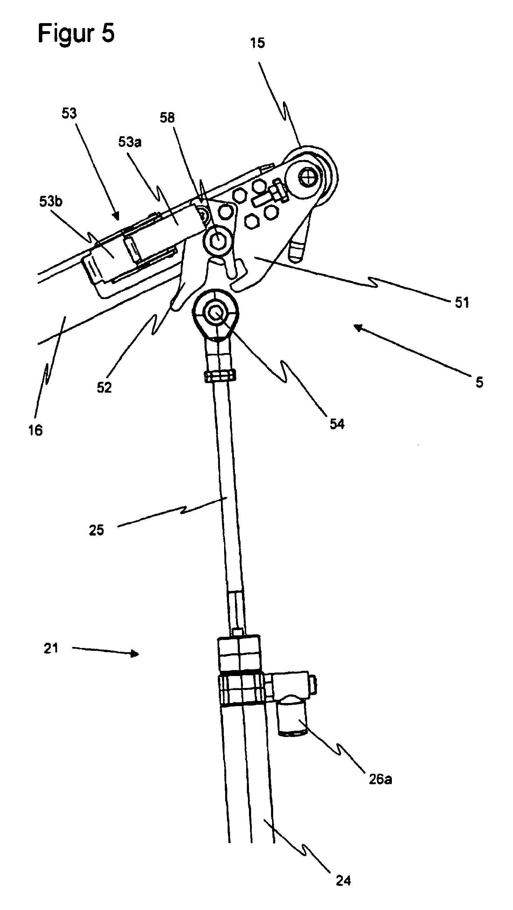

In der **Figur 5** ist eine Detaildarstellung der geöffneten Aufnahme 5 dargestellt. Die beiden Teile der Aufnahme 51 und 52 sind über einen Drehpunkt 58 miteinander verbunden, und werden mittels eines Spannverschlusses 53 bei der in der Figur 2 dargestellten verriegelten Position fest miteinander verbunden. Zur Abnahme des Fördertisches muss dieser Spannverschluss 53 gelöst werden. Der Spannverschluss 53 weist eine federnde Klammer 53a auf die eine an dem zweiten Teil der Aufnahme 52 angeordnete Schraube umgreift und mittels eines an dem Bandkörper 16 bzw. an dem ersten Teil 51 angeordneten Bügel 53b gespannt werden kann. Beim Verbinden des Fördertisches mit dem Hubzylinder wird zunächst die Achse 54 in die Aussparung zwischen die geöffneten Teile der Aufnahme 51 und 52 eingeführt. Anschließend wird durch Schließen des Spannverschlusses 53 die Aufnahme 5 verriegelt.

Die beiden miteinander verbundenen Teile 51 und 52 haltern in der in Figur 2 dargestellten, verriegelten Position die Kolbenstange 25 in einer zweiteiligen Lagerschale der Aufnahme 5, die durch die beiden Teile 51 bzw. 52 geformt wird. Jedes der beiden Teile 51 und 52 weist dazu eine Ausnehmung auf, deren Kontur so ausgeformt ist, dass die beiden über den Spannverschluss 53 verbundenen Teile 51 und 52 gemeinsam eine Lagerschale ausbilden in der ein Anschluss 54 der Kolbenstange 25 gehaltert wird. Die geöffnete Position der Aufnahme 5 kann man aus der Figur 5 entnehmen.

Der Anschluss 54 ist als Verbindungsachse ausgebildet, und verbindet die beiden quer zur Förderrichtung auf gleicher Höhe des Fördertisches 12 angeordneten Hubzylinder miteinander, sodass diese nicht nur über den Förderbandkörper 16 sondern über die zusätzliche Achse 54 miteinander mechanisch verbunden und somit stabilisiert sind. Diese zusätzliche Achse 54 bewirkt, dass sich die verbundenen Hubzylinder bei abgenommenem Fördertisch 12 gegenseitig stabilisieren. Um Toleranzen auszugleichen ist vorgesehen, dass die Verbindungsachse 54 in den Kolbenstangen 25 jeweils beweglich gelagert ist.

Die Umlenkwalze 15 ist in ihrem Abstand zum Förderbandkörper 16 variabel ausgestaltet, in dem über einen Nocken und eine sich auf diesem Nocken abstützende Verstellschraube der Abstand eingestellt werden kann. Durch variieren des Abstandes der Umlenkwalze 15 von dem Förderbandkörper 16 wird die Bandspannung des umlaufenden Endlosbandes eingestellt, um z. B. eine Feinjustierung des Förderbandes auf dem Bandkörper 16 zu ermöglichen. Zur Abnahme des Förderbandes wird dessen Bandspannung reduziert, was durch drehen eines Hebels erfolgt der auf einen Nocken der Umlenkwalze 15 wirkt und somit deren Abstand zum Bandkörper 16 verringert. Dadurch kann das entspannte Endlosband abgenommen und gegen ein neues getauscht werden.

In der Figur 3 ist das geöffnete Schwenklager 3 dargestellt. Der erste Teil 31 des Lagers 3 ist fest mit dem Förderrahmen 17 verbunden, indem an seiner Unterseite ein Sockel 39 vorgesehen ist, der über Schrauben oder Nieten an dem Förderrahmen 16 befestigt wird. Ein Drehpunkt 38 ist vorgesehen, der das zweite Teil des Lagers 32 drehbar lagert. Nach Öffnen des Spannverschlusses 33 kann das zweite Teil 32 des Lagers 3 in Pfeilrichtung aufgeschwenkt werden kann. An dem ersten Teil des Lagers 31 ist ein Antriebsmotor 4 gehaltert. Der Antriebsmotor 4 ist über den ersten Teil 31 des Lagers 3 zumindest mittelbar mit dem Förderrahmen 17 verbunden und mechanisch stabil gehaltert. Der Antriebsmotor 4 ist nur auf einer Seite des Fördertisches vorgesehen. Das in der Darstellung der Figuren hintenliegende und daher nicht gezeigte hintere Schwenklager 3 weist standarmäßig keinen Antriebsmotor 4 auf.

Es sind jedoch von der Darstellung der Figuren abweichende Ausführungen denkbar, bei denen es auf eine hohe Antriebsleistung ankommt. Bei diesen Anwendungen können beide Schwenklager einen separaten Antriebsmotor 4 aufweisen.

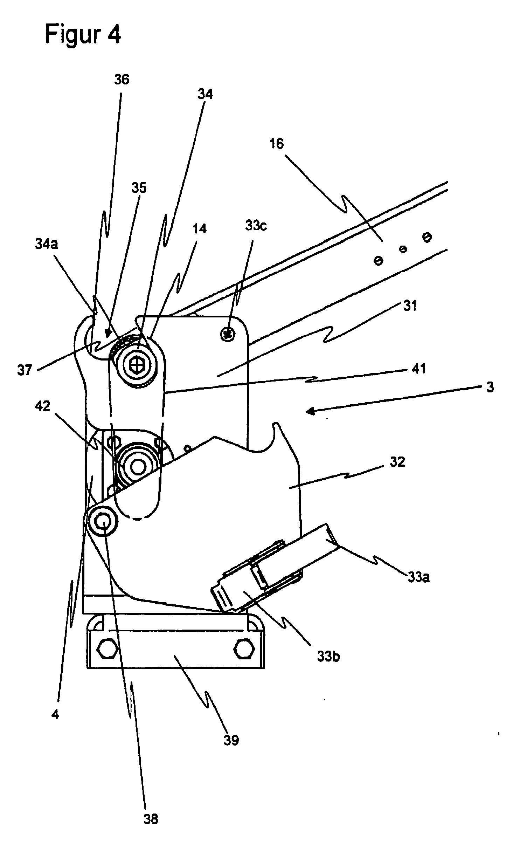

Der Antriebsmotor 4 ist als Elektromotor ausgestaltet und weist als Abtrieb eine Riemenscheibe bzw. ein Zahnrad 42 auf, über das ein Zahnriemen 41, der in **Figur 4** näher dargestellt ist, geführt wird. Der Zahnriemen 41 kämmt auf einer Seite mit dem Abtrieb des Elektromotors 4 und auf der anderen Seite mit einem Zahnrad, welches fest mit der Transportrolle 14 des Fördertisches verbunden ist.

Für einen fehlerfreien Betrieb des Antriebs ist es erforderlich, dass der Zahnriemen 41 gut gespannt ist. Zum Abnehmen des Fördertisches, muss der Zahnriemen jedoch entspannt werden, da bei gespannten Zahnriemen 41 der Fördertisch aufgrund der durch die Spannung herrschenden Kräfte nicht abnehmbar wäre. Zu diesem Zweck weist das Schwenklager 3 eine Kulissenkurve 35 auf, die zum einen eine Aussparung 36 aufweist, die im Normalbetrieb den Adapter 34 der Transportwalze haltert. Die Lage der Aussparung 36 ist so bemessen, dass der Abstand von der Transportwalze zu dem Elektromotor 4 exakt mit der Länge des gespannten Zahnriemens 41 übereinstimmt, so dass dieser in der Betriebstellung gut gespannt ist.

Zur Entnahme des Fördertisches 12 weist die Kulissenführung 35 eine weitere Aussparung 37 auf. Die weitere Aussparung 37 schließt sich direkt an die Aussparung 36 an und stellt eine Führung für die Buchse 34 der Transportwalze 14 dar, indem die Nut der Buchse 34 entlang der Kontur der Kulissenkurve gleitet. Das Führen der Buchse 34 entlang der Kulissenkurve 35 verringert die Distanz der Transportwalze 14 zu dem Antriebsmotor 4, sodass beim Führen der Transportwalze entlang der Kulissenkurve 35 hin zu der Aufnahme 37 der Zahnriemen 41 entspannt wird. Den entspannten Zahnriemen 41 kann man nun einfach von dem Zahnritzel 42 des Elektromotors abnehmen, und somit den Förderbandkörper 16 von dem Schwenklager 3 abheben. Beim Einsetzen des Fördertisches 12 geht man sinngemäß umgekehrt vor, indem man die Buchse 34 zunächst in die Aussparung 37 einsetzt, dort den Zahnriemen 41 über die Riemenscheiben 34a und 42 legt und dann die Transportwalze 14 entlang der Kulissenführung 35 hin zu der Aussparung 36 führt. Dabei wird dann der Zahnriemen 41 automatisch gespannt. Durch anschließendes Schließen des Spannverschlusses 33 wird die Transportwalze 14 mit dem Förderrahmen verbunden.

In der Figur 5 ist die geöffnete Aufnahme 5 dargestellt. Sie ist als zweiteiliges Lager ausgebildet. Die Aufnahme 5 weist ein erstes Teil 51 auf, welches fest an dem Bandkörper 16 verbunden ist, vorzugsweise mit diesem verschraubt oder vernietet, und eine zweites Teil 52, welches über einen Drehpunkt 58 drehbar an dem ersten Teil 51 gelagert ist. Das Teil 51 und das Teil 52 weisen jeweils eine Aussparung auf, deren Abmessungen wiederum auf die Achse 54 des Hubzylinders 21 angepasst ist, so dass diese passgenau und spielfrei in der zwischen dem Teil 51 und dem Teil 52 gebildeten Aussparung aufgenommen werden kann.

## Patentansprüche

1. Transportvorrichtung für Stückgut mit einem angetriebenen Förderband, welches wenigstens einen von einem feststehenden Förderrahmen (17) abnehmbaren Fördertisch (12; 13) mit einem über eine angetriebene Transportwalze (14) und eine Umlenkwalze (15) geführten Endlosband aufweist,
**dadurch gekennzeichnet,**
**dass** der Förderrahmen (17) ein zweiteiliges Lager (3) zum Haltern der Transportwalze (14) und/oder der Umlenkwalze (15) aufweist, und das Lager (3) mittels eines Schnellverschlusses (33) zum Abnehmen des Fördertisches durch Trennen der beiden Lagerteile (31; 32) zu öffnen ist.

2. Transportvorrichtung nach Anspruch 1,
**dadurch gekennzeichnet,**
**dass** ein erstes Teil (31) des Lagers (3) feststehend mit dem Förderrahmen (17) verbunden ist und das zweite Teil (32) des Lagers schwenkbar mit dem Förderrahmen und/oder dem ersten Teil (31) des Lagers verbunden ist.

3. Transportvorrichtung nach Anspruch 1 oder 2,
**dadurch gekennzeichnet,**
**dass** der Schnellverschluss (33) als manuell zu öffnender Spannverschluss oder Riegelverschluss oder Knebelverschluss ausgebildet ist.

4. Transportvorrichtung nach Anspruch 1 oder 3,
**dadurch gekennzeichnet,**
**dass** der Schnellverschluss (33) als Spannverschluss ausgebildet ist, der zum Halten des Fördertisches die beiden Teile (31; 32) des Lagers (3) so miteinander verbindet, dass ein Adapter (34), vorzugsweise eine Achse der Transportwalze (14) oder Umlenkwalze (15), passgenau in dem Lager aufgenommen ist.

5. Transportvorrichtung nach Anspruch 4,
**dadurch gekennzeichnet,**
**dass** der Spannverschluss (33) eine Klammer (33a) aufweist, die an dem ersten Lagerteil (31) angreift und über einen an dem zweiten Lagerteil (32) angebrachten Bügel (33b) spannbar ist.

6. Transportvorrichtung nach einem der Ansprüche 1 bis 5,
**dadurch gekennzeichnet,**
**dass** die Transportwalze (14) über einen von einem Motor (4) angetriebenen Zahnriemen (41) angetrieben ist, indem der Motor an dem Förderrahmen (17) ortsfest gehaltert ist und der Zahnriemen (41) mit einem drehfest mit der Transportwalze (14) verbundenen Zahnrad (34a) kämmt.

7. Transportvorrichtung nach einem der Ansprüche 1 bis 6,
**dadurch gekennzeichnet,**
**dass** das erste Lagerteil (31) eine Kulissenkurve mit einer Halterungsaussparung (36) zum Haltern der Transportwalze (14) und einer von der Halterungsaussparung (36) ausgehenden Kulissenbahn zum Führen der Transportwalze (14) aufweist.

8. Transportvorrichtung nach einem der Ansprüche 1 bis 7,
**dadurch gekennzeichnet,**
**dass** das zweite Lagerteil (32) bei geschlossenem Spannverschluss (33) die Kulissenbahn des ersten Lagerteils (31) abdeckt, so dass die Transportwalze (14) ortsfest zwischen den beiden Lagerteilen (31; 32) gelagert ist.

9. Transportvorrichtung nach einem der Ansprüche 1 bis 8,
**dadurch gekennzeichnet,**
**dass** der Fördertisch (12; 13) schwenkbar gelagert ist, indem die Transportwalze (14) die Drehachse (A; B) des Fördertisches (12; 13) bildet.

10. Transportvorrichtung nach einem der Ansprüche 1 bis 9,
**dadurch gekennzeichnet,**
**dass** der Fördertisch (12; 13) einen Schwerikantrieb (2) zum Schwenken des Fördertisches aufweist, der einen Linearantrieb mit einem elektrischen Spindeltrieb oder einem pneumatischen Hubzylinder (21; 22) aufweist.

11. Transportvorrichtung nach Anspruch 10,
**dadurch gekennzeichnet,**
**dass** der Linearantrieb mit dem Fördertisch lösbar verbunden ist, indem ein Anschluss (54) des Linearantriebs in einer zweiteiligen Aufnahme (5) gehaltert ist, und die Aufnahme (5), zum Abnehmen des Fördertisches (12; 13), durch trennen der beiden Aufnahmeteile (51, 52) zu öffnen ist.

12. Transportvorrichtung nach Anspruch 11,
**dadurch gekennzeichnet,**
**dass** ein erstes Teil (51) der Aufnahme (5) feststehend mit dem Fördertisch (12; 13) verbunden ist und das zweite Teil der Aufnahme (52) schwenkbar mit dem Fördertisch verbunden ist.

13. Transportvorrichtung nach Anspruch 11 oder 12,
**dadurch gekennzeichnet,**
**dass** zum Halten des Fördertisches (12; 13) ein lösbarer Spannverschluss (53) die beiden Teile (51; 52) der Aufnahme (5) so miteinander verbindet, dass der Anschluss des Linearantriebs passgenau in der Aufnahme (5) aufgenommen ist.

## Claims

1. Transport device for piece goods, with a driven conveyer belt which has at least one conveyer table (12; 13) which is removable from a fixed conveyer frame (17) and has an endless belt guided via a driven transport roller (14) and a deflecting roller (15), **characterized in that** the conveyer frame (17) has a two-part bearing (3) for securing the transport roller (14) and/or the deflecting roller (15), and the bearing (3) can be opened by means of a rapid-action fastener (33) in order to remove the conveyer table by separating the two bearing parts (31; 32).

2. Transport device according to Claim 1, **characterized in that** a first part (31) of the bearing (3) is connected fixedly to the conveyer frame (17) and the second part (32) of the bearing is connected pivotably to the conveyer frame and/or to the first part (31) of the bearing.

3. Transport device according to Claim 1 or 2, **characterized in that** the rapid-action fastener (33) is designed as a clamping fastener or bolt-type fastener or toggle-type fastener which can be opened manually.

4. Transport device according to Claim 1 or 3, **characterized in that** the rapid-action fastener (33) is designed as a clamping fastener which, in order to hold the conveyer table, connects the two parts (31; 32) of the bearing (3) to each other in such a manner that an adapter (34), preferably an axle of the transport roller (14) or deflecting roller (15), is accommodated in a precisely fitting manner in the bearing.

5. Transport device according to Claim 4, **characterized in that** the clamping fastener (33) has a clip (33a) which acts on the first bearing part (31) and can be clamped over a shackle (33b) fitted on the second bearing part (32).

6. Transport device according to one of Claims 1 to 5, **characterized in that** the transport roller (14) is driven via a toothed belt (41) driven by a motor (4), by the motor being secured in a fixed position on the conveyer frame (17) and the toothed belt (41) meshing with a gearwheel (34a) connected to the transport roller (14) for conjoint rotation.

7. Transport device according to one of Claims 1 to 6, **characterized in that** the first bearing part (31) has a slotted guide can with a securing recess (36) for securing the transport roller (14) and with a slotted guide track which orginates from the securing recess (36) and is intended for guiding the transport roller (14).

8. Transport device according to one of Claims 1 to 7, **characterized in that**, when the clamping fastener (33) is closed, the second bearing part (32) covers the slotted guide track of the first bearing part (31) such that the transport roller (14) is mounted in a fixed position between the two bearing parts (31; 32).

9. Transport device according to one of Claims 1 to 8, **characterized in that** the conveyer table (12; 13) is mounted pivotably by the transport roller (14) forming the axis of rotation (A; B) of the conveyer table (12; 13).

10. Transport device according to one of Claims 1 to 9, **characterized in that** the conveyer table (12; 13) has a pivoting drive (2) for pivoting the conveyer table which has a linear drive with an electric spindle drive or a pneumatic lifting cylinder (21; 22).

11. Transport device according to Claim 10, **characterized in that** the linear drive is releasably connected to the conveyer table by a connection (54) of the linear drive being secured in a two-part receptacle (5), and the receptacle (5) being openable, in order to remove the conveyer table (12; 13), by separation of the two receptacle parts (51, 52).

12. Transport device according to Claim 11, **characterized in that** a first part (51) of the receptacle (5) is fixedly connected to the conveyer table (12; 13) and the second part of the receptacle (52) is pivotably connected to the conveyer table.

13. Transport device according to Claim 11 or 12, **characterized in that**, in order to hold the conveyer table (12; 13), a releasable clamping fastener (53) connects the two parts (51; 52) of the receptable (5) to each other in such a manner that the connection of the linear drive is accommodated in a precisely fitting manner in the receptable (5).

## Revendications

1. Dispositif de transport pour articles individuels, comprenant une bande transporteuse entraînée qui présente au moins une table de transport (12 ; 13) pouvant être enlevée d'un cadre de transport fixe (17) avec une bande sans fin guidée sur un rouleau de transport (14) entraîné et un rouleau déflecteur (15),
**caractérisé en ce que**
le cadre de transport (17) présente un palier en deux parties (3) pour retenir le rouleau de transport (14) et/ou le rouleau déflecteur (15), et le palier (3) peut être ouvert par séparation des deux parties de palier (31 ; 32) au moyen d'une fermeture rapide (33) en vue d'enlever la table de transport.

2. Dispositif de transport selon la revendication 1,
**caractérisé en ce**
**qu'**une première partie (31) du palier (3) est connectée fixement au cadre de transport (17) et la deuxième partie (32) du palier est connectée de manière pivotante au cadre de transport et/ou à la première partie (31) du palier.

3. Dispositif de transport selon la revendication 1 ou 2,
**caractérisé en ce que**
la fermeture rapide (33) est réalisée sous forme de fermeture de serrage ou de fermeture de verrouillage ou de fermeture à barrette devant être ouverte manuellement.

4. Dispositif de transport selon la revendication 1 ou 3,
**caractérisé en ce que**
la fermeture rapide (33) est réalisée sous forme de fermeture de serrage qui relie les deux parties (31 ; 32) du palier (3) l'une à l'autre pour retenir la table de transport de telle sorte qu'un adaptateur (34), de préférence un axe du rouleau de transport (14) ou du rouleau déflecteur (15), soit reçu par ajustement précis dans le palier.

5. Dispositif de transport selon la revendication 4,
**caractérisé en ce que**
la fermeture de serrage (33) présente une pince (33a) qui vient en prise au niveau de la première partie de palier (31) et qui peut être serrée par le biais d'un étrier (33b) monté sur la deuxième partie de palier (32).

6. Dispositif de transport selon l'une quelconque des revendications 1 à 5,
**caractérisé en ce que**
le rouleau de transport (14) est entraîné par le biais d'une courroie dentée (41) entraînée par un moteur (4), le moteur étant retenu fixement sur le cadre de transport (17) et la courroie dentée (41) s'engrenant avec une roue dentée (34a) connectée de manière solidaire en rotation au rouleau de transport (14).

7. Dispositif de transport selon l'une quelconque des revendications 1 à 6,
**caractérisé en ce que**
la première partie de palier (31) présente une came à coulisse avec un évidement de retenue (36) pour retenir le rouleau de transport (14) et une piste à coulisse partant de l'évidement de retenue (36) pour guider le rouleau de transport (14).

8. Dispositif de transport selon l'une quelconque des revendications 1 à 7,
**caractérisé en ce que**
la deuxième partie de palier (32), lorsque la fermeture de serrage (33) est fermée, recouvre la piste à coulisse de la première partie de palier (31) de sorte que le rouleau de transport (14) soit supporté fixement entre les deux parties de palier (31 ; 32).

9. Dispositif de transport selon l'une quelconque des revendications 1 à 8,
**caractérisé en ce que**
la table de transport (12 ; 13) est montée de manière pivotante, le rouleau de transport (14) formant l'axe de rotation (A ; B) de la table de transport (12 ; 13).

10. Dispositif de transport selon l'une quelconque des revendications 1 à 9,
**caractérisé en ce que**
la table de transport (12 ; 13) présente un entraînement pivotant (2) pour faire pivoter la table de transport, lequel présente un entraînement linéaire avec un entraînement à broche électrique ou un cylindre de levage pneumatique (21 ; 22).

11. Dispositif de transport selon la revendication 10,
**caractérisé en ce que**
l'entraînement linéaire est connecté de manière desserrable à la table de transport, un raccord (54) de l'entraînement linéaire étant retenu dans un logement (5) en deux parties, et le logement (5), pour enlever la table de transport (12 ; 13), pouvant être ouvert par séparation des deux parties de logement (51, 52).

12. Dispositif de transport selon la revendication 11,
**caractérisé en ce**
**qu'**une première partie (51) du logement (5) est connectée fixement à la table de transport (12 ; 13) et la deuxième partie (52) du logement est connectée de manière pivotante à la table de transport.

13. Dispositif de transport selon la revendication 11 ou 12,
**caractérisé en ce que**
pour retenir la table de transport (12 ; 13), une fermeture de serrage desserrable (53) relie l'une à l'autre les deux parties (51 ; 52) du logement (5), de telle sorte que le raccord de l'entraînement linéaire soit reçu avec ajustement précis dans le logement (5).
